(19) Europäisches Patentamt / European Patent Office / Office européen des brevets

(11) **EP 1 878 890 A1**

(12) **EUROPEAN PATENT APPLICATION**

(43) Date of publication:
**16.01.2008 Bulletin 2008/03**

(51) Int Cl.:
***F01N 7/08*** (2006.01)

(21) Application number: **07012433.4**

(22) Date of filing: **26.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **13.07.2006 KR 20060065745**

(71) Applicant: **Volvo Construction Equipment Holding Sweden AB
631 85 Eskilstuna (SE)**

(72) Inventors:
• **Ikeda, Toshimichi**
  **Changwon (KR)**
• **Yang, Hak Yong**
  **Changwon (KR)**

(74) Representative: **Dr. Weitzel & Partner
Friedenstrasse 10
89522 Heidenheim (DE)**

(54) **Weather cap for exhaust pipe of heavy construction equipment**

(57) A rain hat (7) for heavy construction equipment is disclosed, which comprises a plate (11) which corresponds to a shape of an outlet of the exhaust tube (6); a connection part (12) which is formed at one end of the plate (11) and is extended in a downward direction; and an elastic plate (14) of which one end is connected with the connection part (12), and the other end is engaged with the exhaust tube (6), said elastic plate (14) having a certain length, whereby the outlet of the exhaust tube (6), which is closed by means of the plate (11), opens as a discharge pressure overcomes an elastic force of the elastic plate (14) when exhaust gas is discharged from the exhaust tube (6).

**Fig. 4**

## Description

CROSS-REFERENCE TO RELATED APPLICATION

This application is based on and claims priority from Korean Patent Application No. 10-2006-65745, filed on July 13, 2006 in the Korean Intellectual Property Office, the disclosure of which is incorporated herein in its entirety by reference.

BACKGROUND OF THE INVENTION

1. Field of the Invention

The present invention relates to a rain hat attached to an exhaust tube of an engine.

2. Description of the Background Art

Heavy construction equipment is equipped with an exhaust tube which exhausts gas. Exhaust gas is exhausted via an exhaust tube. Here, the exhaust tube is engaged at an upper swing structure of the equipment. Since an upper swing structure of heavy construction equipment swings in the course of work, the exhaust tube is generally engaged at an upper swing structure so that any interference does not occur with wheels, etc.

Since the exhaust tube is engaged at the upper swing structure and is vertically installed, the exhaust tube needs a cover on an upper end of the vertically installed exhaust tube. Otherwise, rain may fall into the exhaust tube. Some heavy construction equipment are equipped with an improved exhaust tube of which upper end is horizontally bent so that rain does not fall into the exhaust tube. In case of large size heavy construction equipment, a rain hat is generally provided for preventing rain from falling into the exhaust tube.

In case of conventional heavy construction equipment which is provided with a rain hat, rattling noises may occur from the rain hat. When the revolution of an engine is low, the discharge force of exhaust gas is weak, so that the rain hat should be installed at a relatively lower side. In case that an engine works, since exhaust gas is discharged whenever one cycle of the engine finishes, the gas discharge pressure of the exhaust tube is not constant.

In case of a rain hat which is installed at a conventional heavy construction equipment, since the rain hat, which receives a discharge pressure of exhaust gas, is designed to operate with the help of a hinge operation of a pin, the rain hat should freely move with a certain gap from a pin hole. In the conventional art, since a discharge pressure of exhaust gas is not constant, rattling noises occur owing to a gap between the pin and the pin hole when the rain hat works.

So, an operator or other persons may feel uneasy when the above rattling noises occur for thereby causing a lot of problems in the course of work.

SUMMARY OF THE INVENTION

Accordingly, it is an object of the present invention to provide a rain hat attached to an exhaust tube of an engine which is able to prevent rattling noises occurring owing to a conventional rain hat, so that an operator or other persons can feel comfortable in the course of work.

To achieve the above object, in a rain hat which is mounted on an exhaust tube of heavy construction equipment, there is provided a rain hat for heavy construction equipment which comprises a plate which corresponds to a shape of an outlet of the exhaust tube; a connection part which is formed at one end of the plate and is extended in a downward direction; and an elastic plate of which one end is connected with the connection part, and the other end is engaged with the exhaust tube, the elastic plate having a certain length, whereby the outlet of the exhaust tube, which is closed by means of the plate, opens as a discharge pressure overcomes an elastic force of the elastic plate when exhaust gas is discharged from the exhaust tube.

For an easier engagement, the rain hat of the heavy construction equipment is formed larger than the outlet depending on the shape of the outlet of the exhaust tube. Since too larger size rain hat does not look nice, the plate slightly larger than the size of the outlet of the exhaust is preferably used. A rectangular protrusion is formed at an end of the rain hat plate. The protrusion allows the connection part to be formed at a lower surface of the plate and to be connected with the elastic plate. So, the whole shape of the rain hat is a spoon shape.

The connection part is welded at a lower surface of the protrusion of the rain hat plate. The welded connection part is engaged with one end of the elastic plate in the longitudinal direction using an engaging member by forming a bolt hole or a rivet hole for an engagement using an engaging member such as a bolt, etc. A bolt hole or a rivet hole is formed at the portion connected with the connection part of the elastic plate like the connection part.

Here, the elastic plate has a certain length. When it is too short, since the elastic coefficient of the elastic member is not large, greater pressure is needed for moving the rain hat. So, the length of the elastic plate is preferably determined depending on the discharge pressure of the exhaust tube. The other end of the elastic plate is connected with the exhaust tube. Namely, it is connected with a fixing terminal, which is formed at an outer side of the exhaust tube, by using an engaging member such as a bolt, etc. The fixing terminal may be directly connected with the exhaust tube based on a welding method, etc.

According to the operation principle of the present invention which uses the elastic plate, when the discharge pressure of exhaust gas is applied to the rain hat, a force for pushing the rain hat is generated. Moment is generated at the lower side of the elastic plate fixed at the exhaust tube depending on the force which pushes the rain hat upward. The elastic plate has a rotational force owing to the moment, so that the rain hat opens. In case that the pressure decreases, it returns to its original state owing to the elastic force of the plate.

To achieve the above object, in a rain hat which is mounted on an exhaust tube of heavy construction equipment, there is provided a rain hat for heavy construction equipment which comprises a plate which corresponds to a shape of an outlet of the exhaust tube; a connection part which is formed at one end of the plate and is extended in a downward direction; a pair of coil springs of which ends are connected with both lower sides of the connection part; and a bracket which is mounted on the exhaust tube in which the other end of each coil spring is horizontally connected, whereby the outlet of the exhaust tube, which is closed by means of the plate, opens as a discharge pressure overcomes an elastic force of the coil spring when exhaust gas is discharged from the exhaust tube.

Like the above construction, a rain hat plate shaped depending on the shape of an outlet of the exhaust tube, and a rectangular protrusion integrally formed at one end of the plate are provided, which form a spoon shaped rain hat plate. A connection part is welded at a lower surface of the protrusion of the plate. Two holes are formed at both lower ends of the connection part for connecting the coil spring. A spring having a ring shaped end is engaged at the holes. The ring shaped other end of the spring is fixed at the bracket mounted on both sides of the exhaust tube. Two ends are vertically protruded from both sides of the channel shaped bracket. A fixing hole is formed at an upper side of the vertically formed plate.

According to the operation principle, when the discharge pressure of exhaust gas is applied to the rain hat, the rain hat is forced to lift up. When the rain hat is lifted up, rotational force is applied to the coil spring. The present invention does not use a pin as compared to the conventional art, even when pressure is continuously applied thereto, rattling noises do not occur. When pressure decreases, the rotational force of the spring allows the rain hat to be pushed and closed.

BRIEF DESCRIPTION OF THE DRAWINGS

The present invention will become better understood with reference to the accompanying drawings which are given only by way of illustration and thus are not limitative of the present invention, wherein;

Figure 1 is a view illustrating an excavator of a conventional art;
Figure 2 is a cross sectional view illustrating an engine and an exhaust device of a conventional art;
Figure 3 is a side and plane view illustrating a conventional rain hat;
Figure 4 is a plane, side and rear view illustrating a rain hat according to an embodiment of the present invention;
Figure 5 is a view for describing an operation of a rain hat according to an embodiment of the present invention;
Figure 6 is a view for describing an operation force of a rain hat according to an embodiment of the present invention;
Figure 7 is an operation graph of a rain hat according to the present invention; and
Figure 8 is a plane, side and rear view illustrating a rain hat according to another embodiment of the present invention.

DETAILED DESCRIPTION OF THE PREFERRED EMBODIMENTS

The preferred embodiments of the present invention will be described with reference to the accompanying drawings.

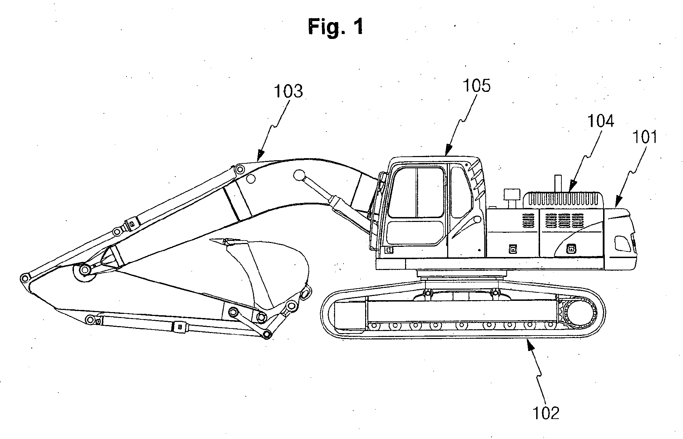

Figure 1 is a view illustrating an excavator. The above excavator comprises an upper swing structure 101, a lower driving structure 102 and a work unit 103. The upper swing structure 101 is equipped with various instruments such as an engine room 104 for driving the work unit 103 and a driver's seat 105.

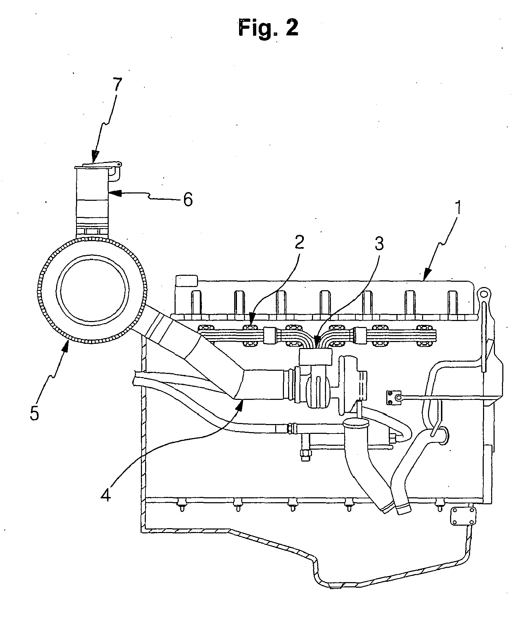

Figure 2 is a view illustrating an engine and an exhaust apparatus mounted. As shown therein, there are provided an engine 1, an exhaust manifold 2 for exhausting gas from the engine, a supercharger 3 which compresses air with the help of exhaust gas, an exhaust tube path 4 which is connected from the supercharger to a muffler, a muffler 5, and a rain hat 7.

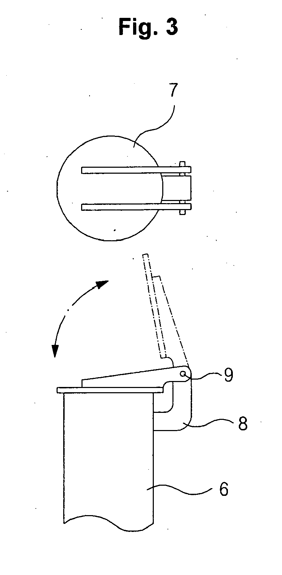

Figure 3 is a view for describing a conventional rain hat. Here, the rain hat is designed to prevent rain from falling into the exhaust tube. When the engine stops, the rain hat closes the outlet of the exhaust tube for thereby preventing rain from falling to the exhaust tube. When the engine works, the rain hat is forced to open by means of the pressure of exhaust gas for thereby forming a discharge path of exhaust gas. In the drawing, reference numeral 7 represents a body of a rain hat, and 8 is a bracket fixed at the exhaust The rain hat 7 is connected with the bracket 8 by means of a pin 9 and is freely rotatable about the pin. Since the above connection portion directly contacts with exhaust gas, carbon is attached. So, an enough space is obtained during the engagement of the pin 9 so that the rain hat 7 can freely rotate. In the conventional, rattling noises occur in the conventional rain hat structure.

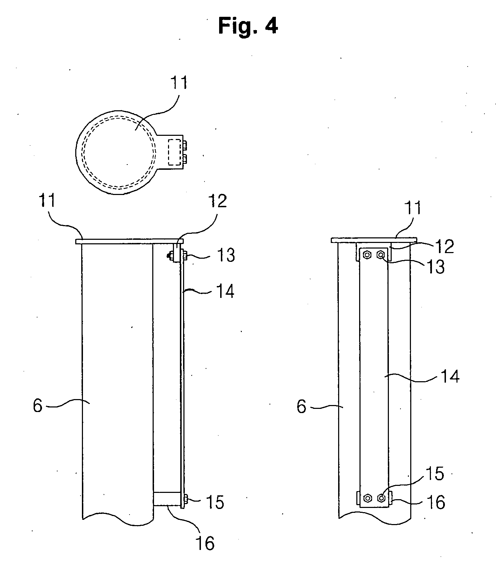

Figure 4 is a plane, side and rear view illustrating a rain hat according to an embodiment of the present invention. The rain hat according to the present invention comprises a spoon shaped rain hat plate 11, a connection part 12 mounted on a lower surface of a protrusion of the rain hat plate, an elastic plate 14 of which one longitudinal end is connected with the connection part with an engaging member 13 such as a bolt, etc., and the other end is connected with an exhaust tube 6 with an engaging member such as a bolt, etc., and a fixing terminal 16 which is engaged at the exhaust tube with a welding method.

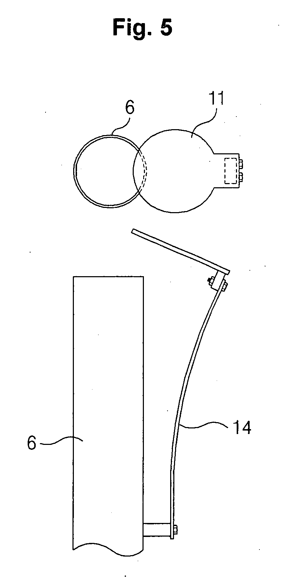

Figure 5 is a view of an operation of Figure 4. The rain hat 11 is supported by means of a plate spring 14 which is formed of an elastic plate. When the engine stops, the rain hat 11 covers the upper end of the exhaust tube 6 for thereby preventing rain from falling into the exhaust tube. When the engine 1 operates and discharges exhaust gas, the rain hat 11 is forced to open by means of the exhaust gas. Here, since the rain hat 11 is supported by means of the plate spring 14, the rain hat 11 is forced to open as the plate spring 14 is elastically transformed. The exhaust gas allows the rain hat 11 to open and is discharged. When the engine 1 stops and does not discharge exhaust gas, the rain hat 14 returns its original position by means of the elastic force of the plate spring 14. So, when the engine does not work, the rain hat covers the upper end of the exhaust tube 6 for thereby preventing rain from falling into the exhaust tube 6. When the discharge force of the exhaust gas is weak, the rain hat keeps opening with a slight open.

In the present invention, since the pin is not used, it is possible to prevent the occurrence of rattling noises which may cause uneasy to an operator or other persons.

The elastic plate 14 of the rain hat 11 may be formed of a certain elastic material which has elastic force. Since the elastic plate 14 contacts with high temperature, it should be preferably made of a heat resistance material.

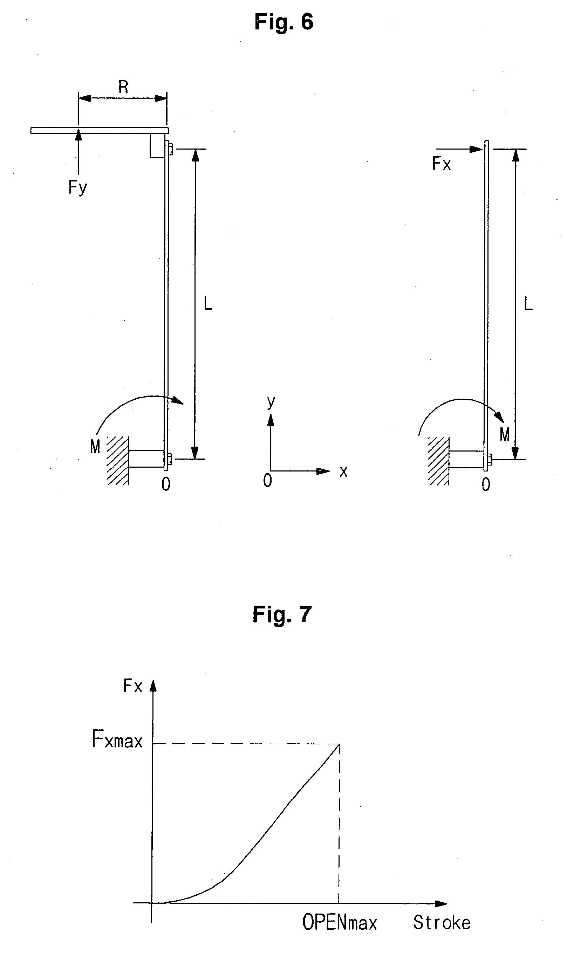

Figure 6 is a view illustrating force and moment with respect to an operation principle that the elastic plate moves according to the present invention. As shown in the left side of Figure 6, a discharge pressure of exhaust gas is applied to the rain hat 11. Since discharge pressure is applied to the rain hat, the force may be expressed as $F_y$. The rain hat 11 is forced to open by means of the force $F_y$. Since the elastic plate 14 is attached to the rain hat 11, the rain hat 11 does not open limitlessly. Moment M occurs by means of the arm length R and the force $F_y$ instead.

$$M = R \bullet F_y$$

The above moment value may be neglected since the weight of the rain hat is not heavy. So, it is possible to simplify like the right side of Figure 6. The force $F_x$ is applied to the elastic plate 14. In this case, since the moment M has the same value,

$$R \bullet F_y = L \bullet F_x$$

$$\therefore \ F_x = F_y \bullet R/L$$

Therefore, when discharge pressure is applied to the rain hat 11, the elastic plate 14 opens. Since the force larger than the unit elastic coefficient of the elastic plate is needed so that the elastic plate moves, the elastic plate 14 opens slightly at first. When the pressure exceeds a certain level, it can easily open. Figure 7 shoes the above-described operation. Figure 7 shows a state that the rain hat 11 smoothly moves by means of the elastic plate 14 mounted on the rain hat 11.

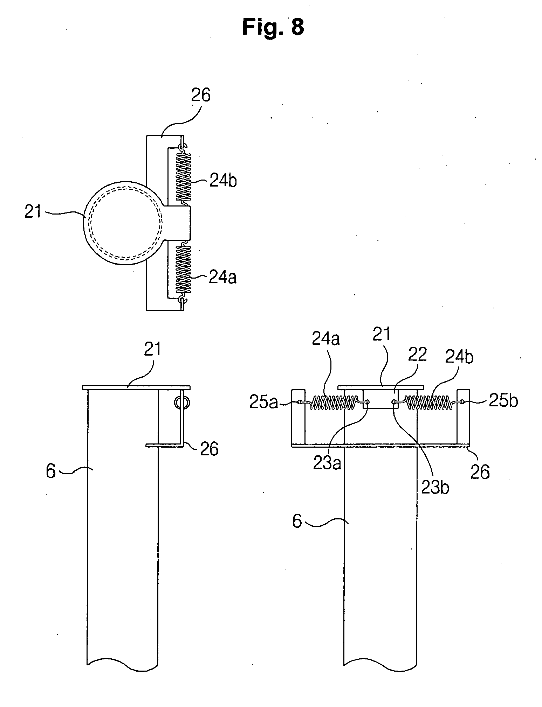

Figure 8 is a view illustrating another structure of the present invention. As shown therein, a rain hat plate 21 is provided. A first connection part 22 is formed at a lower protruded portion of the rain hat 21. A ring formed at one end of each coil spring 24a, 24b is engaged at a corresponding hole 23a, 23b formed at both lower sides of the first connection part. A bracket 26 is vertically formed at both ends of a channel shaped bracket 26. The ring of other end of the coil spring is horizontally connected with the fixing terminal 25a, 25b. The fixing terminal 25a, 25b of the coil spring 24a, 24b is connected with the bracket 26 fixed at the exhaust tube 6. When exhaust gas tries to allow the rain hat 21 to open, the coil spring 24a, 24b is curved, so that the rain hat 21 opens for allowing the exhaust gas to discharge.

As shown in Figure 8, when discharge pressure of the exhaust gas is applied to the rain hat 21, the rain hat 21 is lifted up. Here, since a pin is not used for lifting up the rain hat 21 as compared to the conventional art, rattling noises do not occur. When pressure becomes weaker, the rain hat 21 moves down. When no pressure is applied, the rain hat 21 is closed for thereby preventing rain from falling into the exhaust tube.

As described above, in the present invention, it is possible to prevent rattling noises which occur owing to the movement of a support pin of a rain hat. So, an operator or other persons do not feel uneasy.

In addition, an operator's convenience facility is improved. The work efficiency increases by preventing uneasy noises.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

**Claims**

1. In a rain hat which is mounted on an exhaust tube of heavy construction equipment, a rain hat for heavy construction equipment, comprising:

   a plate which corresponds to a shape of an outlet of the exhaust tube;
   a connection part which is formed at one end of the plate and is extended in a downward direction; and
   an elastic plate of which one end is connected with the connection part, and the other end is engaged with the exhaust tube, said elastic plate having a certain length,
   whereby the outlet of the exhaust tube, which is closed by means of the plate, opens as a discharge pressure overcomes an elastic force of the elastic plate when exhaust gas is discharged from the exhaust tube.

2. The rain hat of claim 1, wherein said elastic plate is a plate spring.

3. In a rain hat which is mounted on an exhaust tube of heavy construction equipment, a rain hat for heavy construction equipment, comprising:

   a plate which corresponds to a shape of an outlet of the exhaust tube;
   a connection part which is formed at one end of the plate and is extended in a downward direction;
   a pair of coil springs of which ends are connected with both lower sides of the connection part; and
   a bracket which is mounted on the exhaust tube in which the other end of each coil spring is horizontally connected,
   whereby the outlet of the exhaust tube, which is closed by means of the plate, opens as a discharge pressure overcomes an elastic force of the coil spring when exhaust gas is discharged from the exhaust tube.

**Fig. 1**

# Fig. 2

# Fig. 3

# Fig. 4

**Fig. 5**

# Fig. 6

# Fig. 7

# Fig. 8

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 041 365 C1 (BEGANSKIJ ALEKSANDR S [SU]; CHAPLYGIN NIKOLAJ M [SU]) 9 August 1995 (1995-08-09) * figures * ----- | 1,2 | INV. F01N7/08 |
| X | DE 43 23 642 A1 (HATZ MOTOREN [DE]) 19 January 1995 (1995-01-19) * the whole document * ----- | 1,2 | |
| X | DE 30 13 512 A1 (HYDRO MASCHINENBAU GMBH [DE]) 15 October 1981 (1981-10-15) * the whole document * ----- | 3 | |
| A | US 4 098 085 A (MCDOWELL PETER VINCENT) 4 July 1978 (1978-07-04) * figures * ----- | 1,2 | |
| A | JP 11 303619 A (FUTABA SANGYO CO LTD) 2 November 1999 (1999-11-02) * figures * ----- | 1,2 | |
| A | JP 05 202730 A (SANGO CO LTD) 10 August 1993 (1993-08-10) * figures * ----- | 1,2 | TECHNICAL FIELDS SEARCHED (IPC) F01N F16K B65D F23J |
| A | US 5 739 483 A (YASHIRO HARUKI [JP] ET AL) 14 April 1998 (1998-04-14) * the whole document * ----- | 1,2 | |

The present search report has been drawn up for all claims

| Place of search | Date of completion of the search | Examiner |
|---|---|---|
| Munich | 16 October 2007 | Laurer, Michael |

EPO FORM 1503 03.82 (P04C01)

EP 1 878 890 A1

## ANNEX TO THE EUROPEAN SEARCH REPORT
## ON EUROPEAN PATENT APPLICATION NO.

EP 07 01 2433

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2007

| Patent document cited in search report | | | Publication date | Patent family member(s) | | Publication date |
|---|---|---|---|---|---|---|
| RU 2041365 | | C1 | 09-08-1995 | NONE | | |
| DE 4323642 | | A1 | 19-01-1995 | AU | 6980194 A | 13-02-1995 |
| | | | | EP | 0708881 A1 | 01-05-1996 |
| | | | | WO | 9502754 A1 | 26-01-1995 |
| | | | | JP | 9500187 T | 07-01-1997 |
| | | | | US | 5747753 A | 05-05-1998 |
| DE 3013512 | | A1 | 15-10-1981 | NONE | | |
| US 4098085 | | A | 04-07-1978 | BR | 7601475 A | 14-09-1976 |
| | | | | DE | 2610243 A1 | 23-09-1976 |
| | | | | ES | 446020 A1 | 01-06-1977 |
| | | | | FR | 2304008 A1 | 08-10-1976 |
| | | | | GB | 1540826 A | 14-02-1979 |
| | | | | JP | 51115325 A | 09-10-1976 |
| | | | | PL | 114142 B1 | 31-01-1981 |
| | | | | SE | 422618 B | 15-03-1982 |
| | | | | SE | 7603207 A | 14-09-1976 |
| JP 11303619 | | A | 02-11-1999 | NONE | | |
| JP 5202730 | | A | 10-08-1993 | NONE | | |
| US 5739483 | | A | 14-04-1998 | NONE | | |

**EP 1 878 890 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 10200665745